Europäisches Patentamt

European Patent Office

Office européen des brevets

(11) Publication number: **0 098 969**
**B1**

(12) **EUROPEAN PATENT SPECIFICATION**

(45) Date of publication of patent specification: **09.09.87**

(51) Int. Cl.⁴: **G 02 B 7/18**

(21) Application number: **83105576.9**

(22) Date of filing: **07.06.83**

(54) Astigmatic optical element, its manufacturing process, illuminating apparatus including the same and articles treated by the same.

(30) Priority: **11.06.82 FR 8210286**

(43) Date of publication of application:
**25.01.84 Bulletin 84/04**

(45) Publication of the grant of the patent:
**09.09.87 Bulletin 87/37**

(84) Designated Contracting States:
**AT BE CH DE FR GB IT LI LU NL SE**

(56) References cited:
**US-A-4 022 523**
**US-A-4 043 644**
**US-A-4 119 366**
**US-A-4 139 270**
**US-A-4 197 157**

(73) Proprietor: **Gleizes, Raymond Marc Xavier**
**73 les Mélèzes**
**F-95680 Montlignon (FR)**
(73) Proprietor: **RYFFEL Limited**
**36 Waterloo Road**
**Dublin 4 (IE)**

(72) Inventor: **Arnaud, Jean Pierre Alfred**
**23 rue de Pontoise**
**F-95160 Montmorency (FR)**

(74) Representative: **Arnaud, Jean Pierre Alfred**
**Cabinet Arnaud 94 rue Saint-Lazare**
**F-75009 Paris (FR)**

Courier Press, Leamington Spa, England.

## Description

The invention relates to optical systems especially used in illuminating apparatus. So, it relates to an astigmatic optical element, to its manufacturing process, to an illuminating apparatus including such an optical element, and to articles treated by such an apparatus.

In the following, "optical element" means a reflecting or refracting optical element, such as a mirror or a lens, having an optically polished surface which is not a surface of revolution. The word "astigmatic" means that such an optical element is not anastigmatic, because it does not image an object point onto an image point. For example, such an optical element distributes energy from a point source along a line or over an extended area.

A particular problem that should be solved by the invention is forming a focusing line along which energy density is uniform, from a monomode or mixed mode laser beam. The invention is not to be restricted to this field, but this problem can help to understand the features of the invention.

In many technical fields, focusing of a laser beam energy along a line or distributing such energy over an extended area, with a uniform energy density, is desired, but known systems either integrate energy over the time, preventing real time treatment and generating different treatment conditions, or chop the greatest part of available power, the energy yield being only about 30%.

The present invention relates to an optical system which provides for such an energy distribution. The problem presented by such an optical system is that at least one reflecting or refracting surface must have a shape far different from a revolution shape, which shape cannot be obtained by classical processes used in the optical art because surface polishing can be provided only for plane or revolution surfaces.

Some optical systems have a surface which is not strictly plane or spherical have been provided. For example, French Patent No 2 472 198 discloses a process in which a glass blank is cast and one of its faces is polished either as a plane surface or as a spherical surface. Distorting forces are thereafter applied to the blank, for example by vacuum, and the blank which is suitably mounted along its edges is globally distorted. The obtained deformation is very small and corresponds at maximum to some wavelengths of visible light. This deformation serves for correcting aberrations of images formed by optical systems.

NASA has also developed a flexible mirror for correcting abberations in images of planets and satellites observed by space probes. This mirror includes many piezoelectric acutators providing for local distortions of the reflecting surface, the distortions having an amplitude of about one wavelength of visible light.

Thus, these optical systems use means providing for very slight changes of the reflecting surface configuration and which do not provide for main curvature to the surface.

US—A—4 022 523 discloses an optical assembly which provides a cylindrical mirror of adjustable focal length, formed from a thin member of spring material. The mirror has always a shape of revolution and the member has a constant thickness.

Distorting mirrors used for example in fairs and attractions are also known. They are constructed from metallic plates which are bent in alternate directions to produce enlarged or reduced images of great distorsion. The mirror thickness is constant and the obtained shapes are not precisely determined. The optical quality of these mirrors is poor.

The invention relates to providing astigmatic optical elements having at least one surface which is neither planar nor of revolution and which has an excellent optical polish. The surface can be very different from a planar or revolution surface.

According to the invention, when an optician has determined the ruled surface configuration he desires, he computes the thickness variation of a flat member so that when selected stresses or forces are applied to such member one of its surfaces takes the desired configuration. The surface can be polished when the flat member is not yet distorted, and the flat member is then distorted for its polished surface to take the desired configuration. Alternately the surface is polished when distorting forces are applied to the member, and the polished surface takes the desired configuration either by suppressing forces or by applying different forces.

According to the invention, an astigmatic optical element for modifying the energy distribution of a radiation beam includes

a flat member having two main faces, the thickness of said member varying over the area of the said faces, said flat member, in a first state, having one main face which is planar or is a section of a surface of revolution and is an optically polished surface and the opposite main face is a ruled surface, that is a surface generated by a straight line generatrix, and

means for engaging said flat member along two generatrices and for deforming said flat member by flexing it around generatrices, thus establishing at least one second state of the element in which said optically polished surface is neither planar nor a section of a surface of revolution.

Said ruled surface is preferably a section of a cylindrical surface. However, other ruled surfaces can be used.

In an embodiment, said flat member has two edges substantially parallel to said generatrix, and said deforming means is secured to said edges.

The whole deformation of flat member from one state to another can lie within the elastic deformation range of the material of the flat member. For example, when a flat member is constructed of metal like copper or molybdenum, deformation can be small enough so that applied stress does not go beyond the material yield point. Under this condition, a flat member can be repetitively deformed from one state to the other and inversely. Alternately, if the applied stress is above the material yield point the flat member is subjected to a permanent deformation. For example, some annealed copper mirrors have such a deformation.

The invention also relates to a process for forming an astigmatic optical element including the following steps:

forming the flat member having two main faces, the thickness of said flat member varying over the area of said face,

setting said flat member in a first state in which one main face is substantially either planar or a section of a surface of revolution,

polishing said one main face, and

flexing said flat member around generatrices to provide a second state, in which said one main face is neither planar nor a section of a revolution surface.

In an embodiment, it is preferable that said setting of said flat member in the first state includes mounting said flat member in a fixture and forming said one main face by machining before the polishing step.

In another embodiment, it is preferable that said forming step includes forming the second face as a cylindrical surface and said flexing step includes applying forces at two edges of said flat member parallely to said generatrix.

Preferably, said forming step includes machining said second large face of the flat member. Said machining may be provided by milling, grinding or electric discharge machining.

In an advantageous embodiment, it is preferable that said force applying means includes embedding said two edges of said flat member in two maintaining members and applying contracting or spreading forces to said maintaining members at some distance from said flat member in a direction substantially parallel to said flat member and substantially perpendicular to said generatrix.

Preferably, said one main face is reflecting. The reflecting surface can be directly constituted by the material of the flat member, when such material is metallic, or by a surface of the flat member consituted by a non reflecting material, coated with reflecting metallic material.

The invention also relates to use of optical element as above defined, in an illuminating apparatus comprising an energy beam source and a further mirror.

Preferably, the further mirror is a circular right section cyclindrical mirror having a generatrix which is perpendicular to a plane including a generatrix of said optical element.

Preferably, the apparatus also includes further optical means positioned ahead of said optical element along the beam axis to modify a geometrical parameter of said beam. Such a further optical system can be a simple concave or convex mirror having a cylindrical shape of circular right section or it can be an afocal optical system, for example constituted by two cylindrical mirrors. It is especially preferable for this further optical system to e constituted by two optical elements similar to the optical element according to the invention but having a constant thickness. The two flat members are differently deformed so that the two curvature centers are substantially confused. Such a system is especially preferable because it allows use of a same optical element according to the invention to obtain a focusing line having a selected length from monomode laser beams of different diameters.

In another embodiment, the illuminating apparatus also includes means for conveying articles with a selected velocity, said means being positioned so that the article surface is conveyed in or near a portion of said selected plane in which energy distribution is predetermined, for example constant. Such an apparatus is especially suitable for treating solid material articles, for example for thermal treating of articles.

The advantages of the invention will be better understood from the following description of a particular embodiment, referring to the drawing in which:

Figure 1 is a perspective view of an astigmatic optical element according to the invention forming a cylindrical mirror;

Figure 2 is a top elevation cross-sectionnal view along line 2—2 of figure 1; and

Figure 3 is a schematic partially sectionnal view of an example of a stepped flat member according to the invention, manufactured by milling.

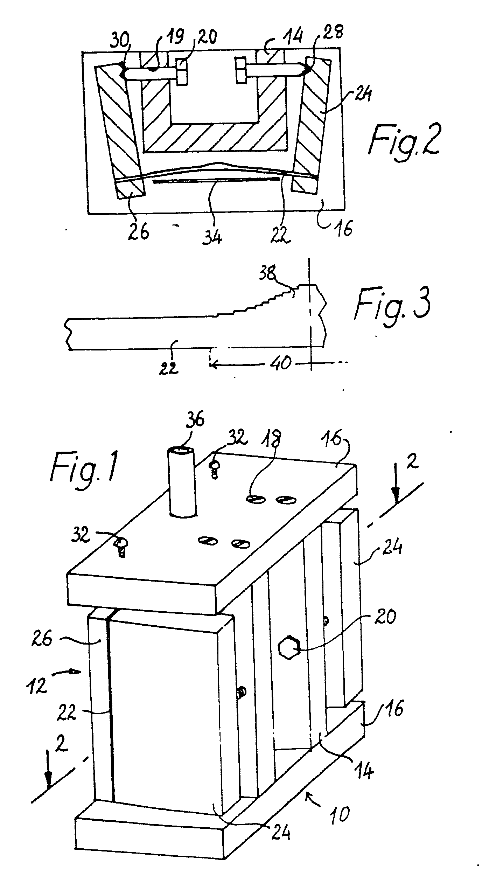

Figure 1 is a perspective view of a typical astigmatic optical element according to the invention in form of a mirror for equalization of energy of a beam along a focusing line formed by a cylindrical mirror having a circular right section (not shown).

The concave mirror shown in figure 1 includes holding means 10 and flexing means 12. Holding means 10 include a U-shaped bar member 14 bearing a rectangular plate 16 fixed by screws 18 at each end. Member 14 and plates 16 form a rigid unit which can be mounted for example on a supporting post. Two threaded holes 19 are coaxilly formed in the legs of member 14. Screws 20 are received in the threaded holes 19.

The flexing means 12 actaute a flat member 22 of variable thickness over its surface, forming a flexible plate, and includes two supports 24. In the shown embodiment, plate 22 has holes in its edges for receiving screws for clamping straps 26 against supports 24 so that edges of plate 22 are practically "embedded" between a support 24 and a strap 26.

The flexing means 12 is supported by the holding means 10 via the two screws 20. Conical sockets 28 with conical angles of 90° are formed in the supports 24 and receive rounded ends 30 of the screws 20. So, as shown in figure 2, threading the screws 20 into the holes 19 spreads external portions (in figure 2) of the supports 24 at some distance from the plate 22. Thus, plate 22 acting as a hinge is flexed and takes a configuration which depends on its thickness variation. Different thickness variation causes different configuration of plate 22. The thickness variation can easily be computed from the desired configuration.

It is to be noted that the flexing means are held only by two screws 20 which allow pivoting around their rotation axis. The flexing means so tend to rest against one of plates 16 and are retained by screws 32 (only two are shown in figure 1) disposed above and under the straps 26 and allowing adjustment of the flexing means position around its rotational axis going through screws 20. Alternately, the two screws 32 of each plate 16 can be replaced by a central screw pushing against the central portion of a bar (not shown) connecting the straps 26.

It is also to be noted with respect to figure 2 that slots 34 form openings in the plate 16 near the edges of plate 22. The slots serve for blowing air or other gas along the plate 22 when it is illuminated by a laser beam. Each slot 34 communicates with a chamber (not shown) formed inside each plate 16 and connected via a port 36 to a source of suitable compressed air or gas. Blowing of gas provides for cooling the plate 22 and prevents deposition of dust on the plate. Such a mounting allows the illumination of the plate 22 with an energy density of about 2500 to 3500 W/cm$^2$ and more.

Figure 3 is a schematic cross-section of a typical plate 22 according to the invention. It is to be noted that the projection 38 has stepped surface opposite the area 40 of the face illuminated when the mirror is used. As the steps have very little height (some hundredths of millimeter) and the mid-points of the steps are positioned on the desired theoretical curve for thickness variation, the utilized reflecting portion 40, when deformed, takes a configuration practically identical to the desired theoretical curve.

When the flat member shown as plate 22 is manufactured, a plate having a thickness slightly larger than the maximal thickness (by some tenths of a millimeter) is rectified so that a first large face is plane. The rectified face is then fixed to a rigid support and the second face is machined; for example, steps are formed by milling. The plate is then removed from the rigid support, the second face is embedded in a plaster or platic material block, and the first face is polished. The flat member can be used after the plaster or plastic material has been removed.

The plate can be made of OFHC copper. Annealed copper, molybdenum and gold coated materials are other useful materials.

The computing of the necessary thickness variation for a plate is not described because it is well-known to the man skilled in the art of material elasticity. The necessary thickness variation depends on how the flexing forces are applied to the plate. Embeding the plate has been shown in the embodiment, but the plate can also be simply clamped between two jaws. It can be polished when it has the configuration of a circular right section cylinder, and straightened by pulling the edges, variable thickness parts having been formed before that by machining the second face opposite to the polished face. Hence, the configuration of the plate depends on the force application mode. Applied forces themselves depend on the material used for the plate. Computing is obviously simpler when the material is homogeneous and isotropic. However, materials having anisotropic properties can be used, a preferntial direction then being parallel or perpendicular to the generatrix.

In a typical embodiment, a cylindrical mirror is designed for distributing energy from a monomode laser beam having a gaussian energy distribution with a diameter of 10,5 mm (at 1/e$^2$). Constant energy can be obtained along a focusing line having a length of 7 mm and formed by a further cylindrical mirror having a circular right section. This mirror has a focal length of 150 mm. The curvature radius required for the polished mirror surface is computed for obtaining a focusing line with a constant energy density when the mirror is 300 mm ahead of the focusing mirror. Computing shows that the curvature radius of the mirror varies from 1744 mm at the center to 451 mm at 13 mm away from the center. At 5 mm distance from center, the radius is 650 mm and, at 10 mm distance from center, it is 460 mm. The thickness of an annealed copper plate 22 having a free length of 60 mm between the two embedding members 24, 26 is then computed. For central thickness a value of 2,90 mm is selected. The thickness distribution is then computed as being 1,97 mm at 5 mm distance from center, 1,63 mm at 10 mm distance from the center, and 1,53 mm at 13 mm distance from the center. (Results are rounded to the nearest of a hundredth millimeter). The plate is then milled forming steps of 0,5 mm width. Step heights are computed so that each step center is on the desired theoretical curve.

When this mirror and a further cylindrical mirror are used, they form a focusing line of 7 mm length and 0,3 mm width, in which about 95% of the incident laser beam energy is focused.

A uniform energy distribution can also be obtained over a plane. To this end, two mirrors according to the invention can be used, for example with the same thickness variation. In an embodiment, two mirrors designed with above-indicated dimensions are positioned so that the planes including the beam axis and a respective generatrix are perpendicular to each other. Different forces are applied to the two mirrors so that the plane in which the energy distribution is uniform is the same for the two mirrors, though mirrors are positioned sequentially along the beam axis. The energy density is practically constant in a square of 7 mm × 7 mm.

When the ruled surface of the second flat member is cylindrical, that is when all generatrics are parallel, a mirror turned by 90° about the beam axis do not introduce aberrations. In fact, in each plane including a generatrix and being parallel to laser beam, the flat member acts as a simple plane mirror and does not generate aberrations.

The above-described optical system forming a focusing line of 7 mm length is used for treating articles made of different materials.

In a first example, the article is made of 40 CDV 20 steel. The article is conveyed so that the focusing line practically moves on the article surface. Conveying velocity is selected so that the applied energy quantity is about 1000 $J/cm^2$. After treatment, the article is surface hardened, it Vickers hardness HV50 being increased from 220 in base metal to 400 at a distance of 0,1 mm from the surface and to 500 at the surface.

In another example, this article is replaced by a sintered alumina article containing 96% of $Al_2O_3$. Applied energy density is about 50 $J/cm^2$, conveying velocity being proportionately increased. Root mean square roughness is reduced from about 0,1 micron before treating to less than 0,005 micron after treating.

Astigmatic optical elements according to the invention have many industrial applications in different technical fields. For example, mechanical and metallurgical applications are known in which X—Y scanningf of laser beams is used for surface treatment. The illuminating apparatus according to the invention is especially suitable in these applications. For example, known processes are surface treatment such as metal surface hardening, for example local hardening of crankshafts, etc., valve seat plating, for example with corrosion resistant alloy, etc. Such treatments as laser glazing are practically useful only with such an optical system.

In other technical fields, the illuminating apparatus allows roughness reduction. For example, sintered alumina ceramics can be practically galzed. This treatment is preferably used for electronic circuit substrates and for sealing pieces which are now ground by a costly process.

## Claims

1. Astigmatic optical element for modifying the energy distribution of a radiation beam, characterized by

a flat member (22) having two main faces, the thickness of said member varying over the area of the said faces, said flat member (22), in a first state, having one main face which is planar or is a section of a surface of revolution and is an optically polished surface and the opposite main face is a ruled surface, that is a surface generated by a straight line generatrix, and

means for engaging said flat member (22) along two generatrices and for deforming said flat member (22) by flexing it around generatrices, thus establishing at least one second state of the element in which said optically polished surface is neither planar nor a section of a surface of revolution.

2. Optical element according to claim 1, characterized in that said ruled surface is a section of a cylindrical surface.

3. Optical element according to claim 1, characterized in that said flat member (22) has two edges substantially parallel to generatrices to which means for engaging and for deforming are secured.

4. Optical element according to any of preceding claims, characterized in that said optically polished main face is a mirror reflecting surface.

5. Process for forming an astigmatic optical element according to claim 1, characterized in that it includes the following steps:

forming the flat member (22) having two main faces, the thickness of said flat member varying over the area of said faces,

setting said flat member in a first state in which one main face is substantially either planar or a section of a surface of revolution.

polishing said one main face, and

flexing said flat member (22) around generatrices to provide a second state, in which said one main face is neither planar nor a section of a revolution surface.

6. Process according to claim 5, characterized in that said setting of said flat member (22) in the first state includes mounting said flat member in a fixture and forming said one main face by machining before the polishing step.

7. Process according to claim 5 or 6, charcterized in that said forming step includes forming the second face as a cylindrical surface and said flexing step includes applying forces at two edges of said flat member (22) parallely to said generatrix.

8. Process according to claim 7, characterized in that said forming step includes machining said second main face of said flat member (22).

9. Process according to claim 8, characterized in that said machining of the second main face is provided by milling, grinding or electric discharge machining.

10. Process according to claim 7, characterized in that said force applying means includes embedding said two edges of said flat member (22) in two maintaining members (24, 26) and applying contracting or spreading forces to said maintaining members (24, 26) at some distance from said flat member (22) in a direction substantially parallel to said flat member and substantially perpendicular to said generatrix.

11. An illuminating apparatus comprising the optical element according to claim 1 an energy beam source and a further mirror.

12. Apparatus according to claim 11, characterized in that the further mirror is a circular right section cylindrical mirror having a generatrix which is perpendicular to a plane including a generatrix of said optical element.

13. Apparatus according to claim 11 or 12, characterized in that it includes further optical means positioned ahead of said optical element along the beam axis to modify a geometrical parameter of the beam.

14. Apparatus according to any one of claims 11 to 13 for treating determined solid articles, characterized in that it includes means for conveying articles with a selected velocity.

**Patentansprüche**

1. Astigmatisches optisches Element zur Modifizierung der Energieverteilung eines Strahlungsbündels, genkennzeichnet durch

ein flaches Glied (22) mit zwei Hauptseiten, dessen Dicke über den Bereich dieser Seiten variiert, wobei dieses flache Glied (22) in einem ersten Zustand eine Hauptseite aufweist, die planar oder ein Abschnitt einer Rotationsfläche sowie eine optisch polierte Oberfläche ist, während die gegenüberliegende Hauptseite eine linierte Oberfläche ist, d.h. eine Oberfläche, die durch eine geradlinige Erzeugende geschaffen ist, und

Einrichtungen für einen Eingriff dieses flachen Gliedes (22) entlang zweier Erzeugenden sowie für eine Verformung dieses flachen Gliedes (22) durch sein Umbiegen um Erzeugende, so daß wenigstens ein zweiter Zustand des Elements hergestellt ist, in dem die genannte optisch polierte Oberfläche weder planar noch ein Abschnitt einer Rotationsfläche ist.

2. Optisches Element nach Anspruch 1, dadurch gekennzeichnet, daß die linierte Oberfläche ein Abschnitt einer zylindrischen Oberfläche ist.

3. Optisches Element nach Anspruch 1, dadurch gekennzeichnet, daß das flache Glied (2) zwei im wesentlichen parallel zu den Erzeugenden verlaufende Kanten aufweist, an denen Einrichtungen für den Eingriff und für die Vorformung befestigt sind.

4. Optisches Element nach einem der vorhergehenden Ansprüche, dadurch gekennzeichnet, daß die genannte optisch polierte Hauptseite eine Spiegelreflektor-Oberfläche ist.

5. Verfahren zur Herstellung eines astigmatischen optischen Elements nach Anspruch 1, dadurch gekennzeichnet, daß es folgende Schritte enthält:

Formen eines flachen Gliedes (22) mit zwei Hauptseiten, dessen Dicke über den Bereich dieser Seiten variiert,

Einrichten dieses flachen Gliedes in einen ersten Zustand, in dem eine Haupseite im wesentlichen entweder planar oder ein Abschnitt einer Rotationsfläche ist,

Polieren dieser einen Hauptseite und

Umbiegen dieses flachen Gliedes (22) um Erzeugende, um einen zweiten Zustand zu schaffen, in dem die genannte eine Hauptseite weder planar noch ein Abschnitt einer Rotationsfläche ist.

6. Verfahren nach Anspruch 5, dadurch gekennzeichnet, daß das genannte Einrichten dieses flachen Gliedes (22) in seinen ersten Zustand ein Montieren dieses flachen Gliedes in eine Spannvorrichtung und ein Formen dieser einen Haupseite durch Maschinenbearbeitung vor dem Polierschritt einschließt.

7. Verfahren nach Anspruch 5 oder 6, dadurch gekennzeichnet, daß der Formungsschritt eine Formgebung der zweiten Seite als eine zylindrische Oberfläche und der Umbiegeschritt Anwendungskräfte an zwei Kanten dieses flachen Gliedes (22), die parallel zur genannten Erzeugenden verlaufen, einschließt.

8. Verfahren nach Anspruch 7, dadurch gekennzeichnet, daß der Formungsschritt ein Maschinenbearbeiten der zweiten Hauptseite des flachen Gliedes (22) einschließt.

9. Verfahren nach Anspruch 8, dadurch gekennzeichnet, daß das Maschienbearbeiten der zweiten Hauptseite durch Fräsen, Schleifen oder elektrische Entladungsbearbeitung geschaffen wird.

10. Verfahren nach Anspruch 7, dadurch gekennzeichnet, daß die Kraftanwendungseinrichtung ein Einbetten der beiden Kanten des flachen Gliedes (22) in zwei Halteglieder (24, 26) und ein Anwenden kontraktierender oder ausbreitender Kräfte gegenüber diesen Haltegliedern (24, 26) bei einem gewissen Abstand von dem flachen Glied (22) ein einer Richtung einschließt, die im wesentlichen parallel zu dem flachen Glied und im wesentlichen senkrecht zu der genannten Erzeugenden verläuft.

11. Beleuchtungsvorrichtung mit einem optischen Element gemäß Anspruch 1, einer Energiebündelquelle und einem weiteren Spiegel.

12. Vorrichtung nach Anspruch 11, dadurch gekennzeichnet, daß der weitere Spiegel ein kreisförmiger rechter Abschnitt eines zylindrischen Spiegels mit einer Erzeugenden ist, die senkrecht zu einer Ebene verläuft, die eine Erzeugende dieses optischen Elements ist.

13. Vorrichtung nach Anspruch 11 oder 12, dadurch gekennzeichnet, daß sie eine weitere optische Einrichtung enthält, die vor dem optischen Element entlang der Bündelachse positioniert ist, um einen geometrischen Parameter des Bündels zu modifizieren.

14. Vorrichtung nach einem der Ansprüche 11 bis 13, für eine Behandlung bestimmter fester Gegenstände, dadurch gekennzeichnet, daß er eine Einrichtung zur Förderung von Gegenständen mit einer ausgewählten Geschwindigkeit enthält.

**Revendications**

1. Elément optique astigmatique destiné à modifier la distribution d'énergie d'un faisceau d'un rayonnement caractérisé par

un organe plat (22) ayant deux faces principales, l'épaisseur de cet organe variant sur l'étendue de ces faces, l'organe plat (22), dans un premier état, ayant une face principale qui est plane out une partie de surface de révolution et est une surface polie optiquement et l'autre face principale est une surface réglée, c'est-à-dire une surface engendrée par une génératrice rectiligne, et

un dispositif destiné à coopérer avec l'organe plat (22) suivant deux génératrices et à déformer cet organe plat (22) par flexion autour de ses génératrices, et établissant ainsi au moins un second état de l'élément dans lequel la surface optiquement polie n'est ni plane ni une partie de surface de révolution.

2. Elément optique selon la revendication 1, caractérisé en ce que la surface réglée est une partie de surface cylindrique.

3. Elément optique selon la revendication 1, caractérisé en ce que l'organe plat (22) a deux bords sensiblement parallèles aux génératrices auxquelles est fixé le dispositif de coopération et de déformation.

4. Elément optique selon l'une quelconque des revendications précédentes, caractérisé en ce que la surface principale optiquement polie est une surface réfléchissante de miroir.

5. Procédé de formation d'un élément optique astigmatique selon la revendication 1, caractérisé en ce qu'il comprend les étapes suivantes:

la formation de l'organe plat (22) ayant deux faces principales, l'épaisseur de cet organe plat variant sur l'étendue de ses faces,

la mise de l'organe plat dans un premier état dans lequel une première face principale est pratiquement soit plane soit une partie de surface de révolution.

le polissage de la première face plane, et

la flexion de l'organe plat (22) autour de génératrices afin qu'il prenne un second état dans lequel la première face principale n'est ni plane, ni une partie de surface de révolution.

6. Procédé selon la revendication 5, caractérisé en ce que la mise de l'organe plat (22) dans un premier état comporte le montage de l'organe plat dans un dispositif de montage et la formation de la première face principale par usinage avant l'étape de polissage.

7. Procédé selon l'une des revendications 5 et 6, caractérisé en ce que l'étape de formation comprend la formation de la seconde face principale sous forme d'une surface cylindrique, et l'étape de flexion comprend l'application de forces à deux bords de l'organe plat (22) parallèlement à la génératrice.

8. Procédé selon la revendication 7, caractérisé en ce que l'étape de formation comprend l'usinage de la second face principale de l'organe plat (22).

9. Procédé selon la revendication 8, caractérisé en ce que l'usinage de la seconde principale est assuré par fraisage, rectification ou usinage par électro-érosion.

10. Procédé selon la revendication 7, caractérisé en ce que le dispositif d'application de forces comprend l'encastrement des deux bords de l'organe plat (22) dans deux organes de maintien (24, 26) et l'application de forces de contraction ou d'écartement aux organes de maintien (24, 26) à une certaine distance de l'organe plat (22) en direction sensiblement parallèle à l'organe plat et sensiblement perpendiculaire à la génératrice.

11. Appareil d'éclairement comprenant l'élément optique selon la revendication 1, une source d'un faisceau d'énergie et un miroir supplémentaire.

12. Appareil selon la revendication 11, caractérisé en ce que le miroir supplémentaire est un miroir cylindrique de section droite circulaire ayant un génératrice qui est perpendiculaire à un plan contenant une génératrice de l'élément optique.

13. Appareil selon l'une des revendications 11 et 12, caractérisé en ce qu'il comporte un dispositif optique supplémentaire placé en amont de l'élément optique suivant l'axe du faisceau et destiné à modifier un paramètre géométrique du faisceau.

14. Appareil selon l'une quelconque des revendications 11 à 13, destiné au traitement d'objets solides déterminés, caractérisé en ce qu'il comprend un dispositif de transport des objets avec une vitesse choisie.

*Fig.2*

*Fig.3*

*Fig.1*